# EUROPEAN PATENT SPECIFICATION

(11) **EP 3 616 437 B1**
(45) Date of publication and mention of the grant of the patent: **19.07.2023**
(21) Application number: 17721111.7
(22) Date of filing: 28.04.2017
(51) Int. Cl.: H04W 28/08, H04L 5/00, H04W 48/18, H04W 88/06, H04W 16/14, H04W 72/04, H04W 28/082

(54) **RADIO BAND SHARING BETWEEN NODES**
FUNKBANDTEILUNG ZWISCHEN KNOTEN
PARTAGE DE BANDE RADIO ENTRE DES NOEUDS

(43) Date of publication of application: 04.03.2020
(73) Proprietor: Nokia Solutions and Networks Oy, 02610 Espoo (FI)
(72) Inventor: MARJELUND, Pekka Johannes, 08680 Muijala (FI)
(74) Representative: Nokia EPO representatives
(86) International application number: PCT/EP2017/060184
(87) International publication number: WO 2018/196994

(56) References cited:
- WO-A1-2017/030483
- US-A1- 2015 110 048
- CATT: "Discussion on Architectural and Procedure of C-plane for LTE- WLAN Aggregation", 3GPP DRAFT; R2-152125-DISCUSSION ON ARCHITECTURAL AND PROCEDURE OF C-PLANE-V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Fukuoka, Japan; 20150525 - 20150529 15 May 2015 (2015-05-15), XP050970583, Retrieved from the Internet: URL:http://www.3gpp.org/ftp/tsg_ran/WG2_RL 2/TSGR2_90/Docs/ [retrieved on 2015-05-15]
- ROSA CLAUDIO ET AL: "Dual connectivity for LTE small cell evolution: functionality and performance aspects", IEEE COMMUNICATIONS MAGAZINE, IEEE SERVICE CENTER, PISCATAWAY, US, vol. 54, no. 6, 1 June 2016 (2016-06-01), pages 137-143, XP011614747, ISSN: 0163-6804, DOI: 10.1109/MCOM.2016.7498101 [retrieved on 2016-06-22]
- "3rd Generation Partnership Project; Technical Specification Group Radio Access Network; Evolved Universal Terrestrial Radio Access Network (E- UTRAN) and Wireless LAN (WLAN); Xw application protocol (XwAP) (Release 13)", 3GPP DRAFT; DRAFT TS 36_463 XWAP_0_3_0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 November 2015 (2015-11-16), XP051007256, Retrieved from the Internet: URL:http://www.3gpp.org/ftp/Meetings_3GPP_ SYNC/RAN3/Docs/ [retrieved on 2015-11-16]

## Description

### FIELD

The present invention relates to communications. More particularly, the present invention relates to radio band sharing between nodes.

### BACKGROUND

Increased service requirements may require a terminal device to form plurality of communication links between the terminal device and a plurality of network nodes. One example of such may be the use of Dual Connectivity (DC). However, there seems to be a rising demand for providing solutions that further increase the efficiency of the communication.

### PRIOR ART

CATT: "Discussion on Architectural and Procedure of C-plane for LTEWLAN Aggregation", 3GPP DRAFT; R2-152125-DISCUSSION ON ARCHITECTURAL AND PROCEDURE OF C-PLANE-V1, 3RD GENERATION PARTNERSHIP PROJECT (3GPP), MOBILE COMPETENCE CENTRE:
   This document proposes how to support LTE and WLAN aggregation. A new interface Xw must be introduced between eNB and WLAN. Two alternatives are proposed:
      1. eNB is completely responsible to perform C-plane functionalities on air interface and controls the establishment, modification, and release of the split/steered bearer.
      2. WLAN network can accept/deny some EPS bearers at establishment and is able to initiate the modification or release procedure to release some bearers.

   I.e., the eNB manages the C-Plane functionalities alone or gives some rights to the WLAN network to manage the EPS bearers based on the request from eNB.
WO 2017/030483 A1:
   This application discusses how to add, modify, and release the L TE-WLAN aggregation for a UE. Following steps are proposed:
   The eNB
      - configures the UE with a set of WLAN identifiers.
      - sends a request message to add or modify a connection between the second network node and a terminal device.
      - receives a response message from the second network node, e.g., an acknowledgement or a negative acknowledgement of the request message.
      - configures the terminal device according to information in the received response message.
   I.e., eNB configures the terminal according to the information received in response from second node.
ROSA CLAUDIO ET AL: "Dual connectivity for LTE small cell evolution: functionality and performance aspects", IEEE COMMUNICATIONS MAGAZINE, IEEE SERVICE CENTER, PISCATAWAY, US, vol. 54, no. 6, 1 June 2016 (2016-06-01), pages 137-143, XP011614747, ISSN:
   This article offers a description of the standardized DC feature.
   The MeNB controls the DC configuration, it generates and sends all the RRC messages to the UE. However, the SeNB can request the MeNB to change or release its own part of the RRC configuration via an X2 message. The SeNB is able to provide new radio resource configuration of the cells, but only under control of the MeNB.
US 2015/110048 A1:
   This application provides a method to support by an eNB UEs, capable of communicating data of a same bearer on the first and second RATs simultaneously, and UEs, not capable of communicating data of a same bearer on the first and second RATs.
   For this D4 proposes that the eNB use separate schedulers to independently schedule both types of UEs.
3rd Generation Partnership Project; Technical Specification Group Radio Access Network; Evolved Universal Terrestrial Radio Access Network (E- UTRAN) and Wireless LAN (WLAN); Xw application protocol (XwAP) (Release 13), 3GPP DRAFT TS 36_463 XWAP_0_3_0:
   This specification describes XwAP procedures executed on the Xw interface. One of the XwAP functions is LTE-WLAN Aggregation, which allows the eNB to request a WT to provide radio resources for LWA operation for a certain UE while keeping responsibility for that UE.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

In the following the invention will be described in greater detail by means of preferred embodiments with reference to the attached drawings, in which
Figure 1 illustrates a system to which embodiments may be applied to;
Figures 2 and 3 illustrate flow diagrams according to some embodiments;
Figures 4A, 4B, 4C, and 4D illustrate signal diagrams according to some embodiments;
Figures 5A, 5B, and 5C illustrate some embodiments; and
Figures 6 and 7 illustrate block diagrams of apparatuses according to some embodiments.

### DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Embodiments described may be implemented in a radio system, such as in at least one of the following: Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced (LTE-A) or 5G New Radio (NR) (sometimes referred to simply as 5G).

5G is likely to use multiple input - multiple output (MIMO) techniques (e.g. antennas), many more base stations or nodes than the LTE (a so-called small cell concept), including macro sites operating in co-operation with smaller stations and perhaps also employing a variety of radio technologies for better coverage and enhanced data rates. 5G will likely be comprised of more than one radio access technology (RAT), each optimized for certain use cases and/or spectrum. 5G mobile communications will have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput, and mobility. It is further noted that LTE may refer both to regular LTE or LTE-A, or any other LTE-based system on technology.

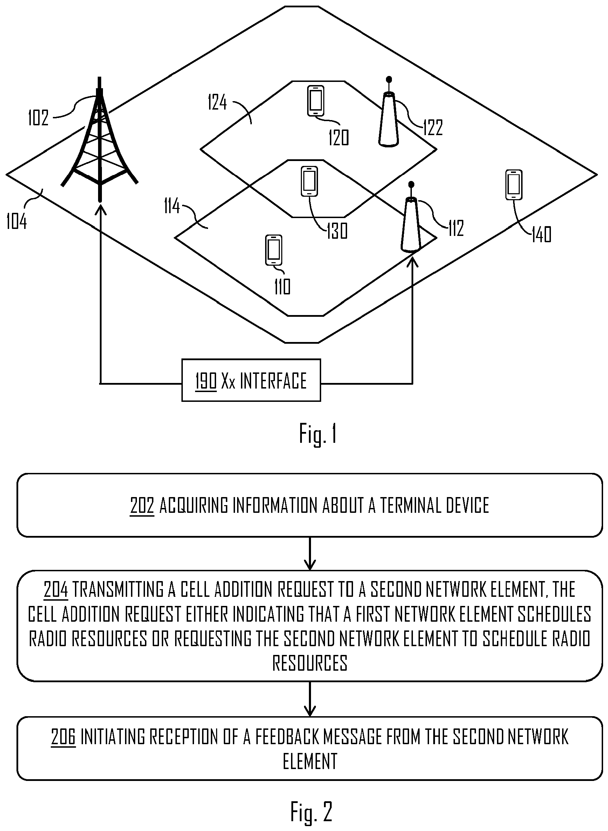

Figure 1 illustrates example of a radio system (also referred to as a cellular communication system) to which embodiments of the invention may be applied. Radio communication networks (also referred to as cellular communication networks), such as the Long Term Evolution (LTE), the LTE-Advanced (LTE-A) of the 3^{rd} Generation Partnership Project (3GPP), or the predicted 5G solutions, are typically composed of at least one network element, such as a network element 102, providing a cell 104. In the example of Figure 1, cells 104, 114, 124 may be shown. The cell 114 may be provided by a network element 112, and the cell 124 may be provided by a network element 122, for example. The cell 104 may be provided by the network element 102. It is, however, possible that a network element of the radio system may provide more than one cell. Thus, for example, the network element 102 may provide the cell 104, the cell 114, and/or the cell 124 at least in some implementations.

Each cell of the radio communication network may be, e.g., a macro cell, a micro cell, a femto, or a pico-cell, for example. Each of the network elements of the radio communication network, such as the network elements 102, 112, 122, may be an evolved Node B (eNB) as in the LTE and LTE-A, a radio network controller (RNC) as in the UMTS, a base station controller (BSC) as in the GSM/GERAN, or any other apparatus capable of controlling radio communication and managing radio resources within a cell. For 5G solutions, the implementation may be similar to LTE-A, as described above. 5G network element may be referred to as gNB (i.e., abbreviation may mean gigabyte Node B). The network elements 102, 112, 122 may be base station(s) or a small base station(s), for example. In the case of multiple network elements in the communication network, the network elements may be connected to each other with an Xx interface 190. One example of such may be the X2 interface as specified in the LTE. Example of this may be shown in Figure 1, wherein the network element 112 may be shown to be connected to the network element 102 via the Xx interface 190. Thus, for example, the communication system may comprise on or more Xx interfaces configured to enable communication between different network elements of the system. I.e., the network elements may transmit data and control messages between each other. Other communication methods between the network elements may also be possible. At least some of the network elements 102, 112, 122 may be further connected via an S1 interface to an evolved packet core, more specifically to a mobility management entity (MME) and to a system architecture evolution gateway (SAE-GW).

The cells 114, 124 may also be referred to as sub-cells or local area cells, for example. The network elements 112, 122 may be referred to as sub-network elements or local area access nodes, for example. The cell 104 may be referred also to as a macro cell, for example. The network element 102 may be referred to as a macro network element, for example. In an embodiment, the local area access nodes are network elements similar to the network element 102. Thus, for example, the local area access node 112 may be an eNB or a macro eNB.

In an embodiment, the network element 102 is an eNB and one or more network elements 112, 122 are gNBs. In such example, the eNB may be configured to at least partially control operation of the gNBs (e.g., DC and/or Carrier Aggregation (CA)).

In an embodiment, the network element 102 is a gNB and one or more network elements 112, 122 are eNBs. In such example, the gNB may be configured to at least partially control operation of the eNBs (e.g., DC and/or CA).

The cells 104, 114, 124 may provide service for at least one terminal device 110, 120, 130, 140, wherein the at least one terminal device 110, 120, 130, 140 may be located within or comprised in at least one of the cells 104, 114, 124. The at least one terminal device 110, 120, 130, 140 may communicate with the network elements 102, 112, 122 using communication link(s), which may be understood as communication link(s) for end-to-end communication, wherein source device transmits data to the destination device. It needs to be understood that the cells 104, 114, 124 may provide service for a certain area, and thus the at least one terminal device 110, 120, 130, 140 may need to be within said area in order to be able to use said service. For example, a third terminal device 130 may be able to use service provided by the cells 104, 114, 124. On the other hand, fourth terminal device 140 may be able to use only service of the cell 104, for example.

The cells 104, 114, 124 may be at least partially overlapping with each other. Thus, the at least one terminal device 110, 120, 130, 140 may be enabled to use service of more than one cell at a time. For example, the sub-cells 114, 124 may be small cells (e.g., pico, femto) that are associated with the macro cell 104. This may mean that the network element 102 (e.g., macro network element 102) may at least partially control the network elements 112, 122 (e.g. local area access nodes). For example, the macro network element 102 may cause the local area access nodes 112, 122 to transmit data to the at least one terminal device 110, 120, 130, 140. It may also be possible to receive data, by the network element 102, from the at least one terminal device 110, 120, 130, 140 via the network elements 112, 122. To further explain the scenario, the cells 114, 124 may be at least partially within the cell 104.

In an embodiment, the at least one terminal device 110, 120, 130, 140 is able to communicate with other similar devices via the network element 102 and/or the local area access nodes 112, 122. For example, a first terminal device 110 may transmit data via the network element 102 to a third terminal device 130. The other devices may be within the cell 104 and/or may be within other cells provided by other network elements. The at least one terminal device 110, 120, 130, 140 may be stationary or on the move. In an embodiment, the at least one terminal device 110, 120, 130, 140 may communicate directly with other terminal devices using, for example, Device-to-Device (D2D) communication.

The radio system may support Carrier Aggregation (CA). CA may enable increasing usable bandwidth between the terminal devices and network elements of the radio system. For example, in the 3GPP, CA may be used for LTE-A in order to support wider transmission bandwidths enhancing increased potential peak data rates to meet LTE and/or 5G requirements. For example, more than one component carriers may be aggregated contiguously and/or non-contiguously to provide a wider bandwidth. In uplink carrier aggregation, multiple uplink component carriers may be aggregated and can be allocated in a subframe to a terminal device. Further, the radio system may support intra-band CA with contiguous and/or non-contiguous resource allocation. The radio system may also support inter-band CA enabling non-contiguous resource allocation from more than one radio band.

The radio system may support Dual Connectivity (DC). This may be enabled by the network element 102 and a second network element (e.g., the local area access nodes(s) 112, 122), for example. Naturally, in order to use DC, the at least one terminal device 110, 120, 130, 140 may also need to support DC. The DC may be a radio system feature, wherein the at least one terminal device 110, 120, 130, 140 may simultaneously receive from and/or may simultaneously transmit to at least two network points. Similarly, the radio system of Figure 1 may support Multiple-Input and Multiple-Output (MIMO). Thus, the network elements and/or the terminal devices of the radio system may comprise more than one antenna for data transfer. For example, the network element 102 may be a primary network element (e.g., Primary network element) providing a Primary Cell (PCell) and at least one of the local area access nodes 112, 122 may be a secondary network element (e.g. Secondary network element) and/or a primary secondary network element (e.g. Primary Secondary network element) providing a Secondary Cell (SCell) and/or Primary Secondary Cell (PSCell). For example, in DC, one eNB may control a plurality gNBs. For example, in DC, one gNB may control a plurality eNBs.

It may be possible that the radio system shown in Figure 1 supports Licensed-Assisted Access (LAA) which relates to using unlicensed radio band(s) for data transfer. For example, the network element 102 and/or said second network element may provide one or more unlicensed cells in order to increase data transfer capability on the radio system. For example, the network element 102 may allocate radio resources of the one or more unlicensed cell for the at least one terminal device 110, 120, 130, 140 through CA, thus increasing the data transfer between the at least one terminal device 110, 120, 130, 140 and the network element(s).

It may also be possible that the radio system of Figure 1 supports Machine Type Communication (MTC). MTC may enable providing service for a large amount of MTC capable devices. Such communication may increase the load of the radio communication network and thus solutions to enhance such communication may be beneficial.

The at least one terminal device 110, 120, 130, 140 may comprise mobile phones, smart phones, tablet computers, laptops and other devices used for user communication with the radio communication network. These devices may provide further functionality compared to the MTC schema, such as communication link for voice, video and/or data transfer. However, it needs to be understood that the at least one terminal device 110, 120, 130, 140 may also comprise MTC capable devices, such as sensor devices providing position, acceleration and/or temperature information to name a few examples. That said the radio communication network of Figure 1 may comprise different types of devices (e.g., phones, laptops, tablets, MTC devices) and communication methods (e.g. CA, DC). The amount of devices and data transfer requirements may increase burden of the radio communication network. The Internet of Things (IoT) may even further increase the amount of devices within the radio communication network.

One aspect, in the described system, requiring improvement may be related to coverage issues of the system. That is, it may be beneficial to improve coverage of a certain cell provided by a certain network element. Hence, there is provided a solution that improves coverage in a heterogeneous network, such as a network that utilizes both LTE and 5G communications. Coverage here may need to be understood broadly, referring to distance and/or to bandwidth resources. The solution may utilize radio band sharing between different Radio Access Technologies (RATs), such as LTE and 5G, and provided a way to communicate needed parameters and information between different nodes of the system.

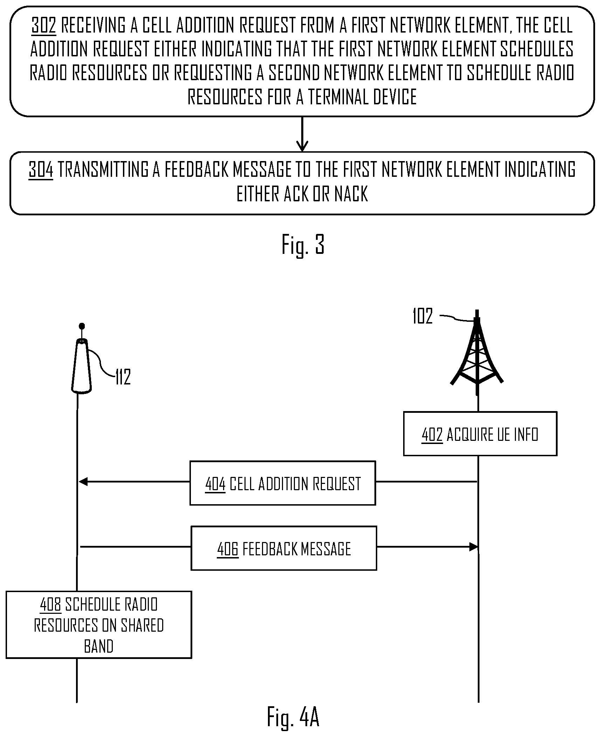

Figures 2 and 3 illustrate flow diagrams according to some embodiments. Referring to Figure 2, a first network element providing a first cell of a cellular communication system (e.g. system of Figure 1) may acquire information about a terminal device of the cellular communication system, the first cell being a first radio access technology cell (block 202); upon determining, based on the acquired information, that the terminal device is capable of utilizing a second radio access technology based communication, transmit a cell addition request message to a second network element providing a second cell of the cellular communication system, the second cell being a second radio access technology cell, wherein the cell addition request message indicates that the terminal device is capable of utilizing the second radio access technology based communication, and wherein the cell addition request message comprises an information element either indicating that the first network element schedules radio resources on a radio band of the first radio access technology for the terminal device or requesting the second network element to schedule radio resources on said radio band for the terminal device (block 204); and initiate reception of a feedback message indicating whether the second network element accepts a cell addition request indicated in the cell addition request message (block 206).

In an embodiment, the first network element is the network element 102. In an embodiment, the second network element is the network element 112 or 122.

Referring to Figure 3, a second network element providing a second cell of a cellular communication system may receive a cell addition request message from a first network element providing a first cell of the cellular communication system, the first cell being a first radio access technology cell and the second cell being a second radio access technology cell, wherein the cell addition request message indicates that the terminal device is capable of utilizing the second radio access technology based communication, and wherein the cell addition request message comprises an information element either indicating that the first network element schedules radio resources on a radio band of the first radio access technology for the terminal device or requesting the second network element to schedule radio resources on said radio band for the terminal device (block 302); and transmit a feedback message to the first network element, the feedback message indicating either acknowledgement or negative-acknowledgement of a cell addition request indicated in the received cell addition request message (block 304).

In an embodiment, the first network element is the network element 102. In an embodiment, the second network element is the network element 112 or 122.

Let us then look closer on some embodiments of Figures 4A to 4D. Referring to Figure 4A, in step 402, the network element 102 may acquire information about a terminal device (also referred to as UE), such as terminal device 110. The information may indicate whether the terminal device 110 is capable of performing second RAT based communication. For example, if the network element 102 is an eNB and the second network element 112 is a gNB, the terminal device 110 related information may indicate whether the terminal device 110 is capable of 5G communication (i.e., with the second network element 112). On the other hand, if for example, the network element 102 is a gNB and the second network element 112 is an eNB, the information may indicate whether the terminal device 110 is capable of LTE communication. For example, the terminal device 110 may transmit a connection request, wherein the connection request comprises the capability information indicating whether the terminal device 110 is capable of certain type of communication (e.g., LTE and/or 5G). It is noted that the terminal device 110 may be capable of communication with the network element 102, but the connection request may further indicate whether the terminal device 110 is capable of communicating with the second network element 112 utilizing different RAT. It further may need to be noted that the capability information may indicate the terminal device's capability to perform DC utilizing two different RATs.

As described earlier, the network element 102 may upon determining that the terminal device 110 is capable of communicating utilizing the second RAT (i.e., RAT of the second network element 112), transmit a cell addition request to the second network element 112 regarding the terminal device 110 (block 404). That is, in such scenario, the terminal device 110 may be enabled to utilize more than one communication link to increase its data rate. The cell addition request may indicate the terminal device's 110 capability to perform the second RAT based communication. Further, the network element 102 may determine which of the two network elements 102, 112 should schedule the terminal device 110 on a shared radio band, wherein the radio band may be shared between the first and second RATs (e.g., between the LTE and 5G). In the example of Figure 4A, the network element 102 has determined that the second network element 112 should perform the scheduling on the shared radio band (i.e., radio band of the first RAT, such as LTE or 5G band). This may mean that the cell addition request so indicates. If the second network element 112 accepts the cell addition request, it may transmit an acknowledgement (ACK) to the network element 102 (block 406). Otherwise, it may transmit a negative-ACK (NACK). If the second network element 112 accepts the addition request, it may further initiate scheduling of radio resources for the terminal device 110 on said shared radio band (i.e., the first RAT radio band).

In an embodiment, if the information element of the cell addition request message (e.g., block 404) requests the second network element 112 to schedule radio resources on the shared radio band for the terminal device, the second network element 112 may schedule the radio resources as described above if it accepts the request. However, if the second network element 112 declines the request, the network element 102 may, in response to receiving feedback information indicating negative-acknowledgement of the cell addition request, initiate scheduling radio resources on the shared radio band for the terminal device 110 and/or initiate transmission of a second cell addition request message requesting the second network element 112 to provide radio resources on a radio band of the second RAT for the terminal device 110. This may mean that if the initial attempt by the network element 102 fails, it may try to schedule radio resources from the shared radio band according to the first RAT based communication. Additionally, or alternatively, the network element 102 may transmit another cell addition request to the second network element 112, requesting the second network element 112 to provide radio resources on the radio band of the second RAT for the terminal device 110. It needs to be noted that the first network element 102 may be capable of providing radio resources according to the first RAT and the second network element 112 may be capable of providing radio resources according to the second RAT. That is, the network element 102 may schedule first RAT data traffic and the second network element 112 may schedule second RAT data traffic. In an embodiment, the first RAT and the second RAT are different to each other (e.g., LTE and 5G or 5G and LTE). So basically, if the cell addition request utilizing the shared band scheduling fails, the network element 102 may configure the second network element 112 to provide radio resources according to DC, i.e., terminal device 110 may be connected to both network elements utilizing different radio bands and different RATs, for example.

In an embodiment, said shared radio band is an uplink radio band. That is, the provided solution may be especially suitable for uplink communication as terminal device 110 may have less transmitting power and/or antennas at its disposal compared with a network element (e.g., node or a base station) of the communication system.

In an embodiment, the network element 102 provides a downlink communication for the terminal device 110 on a first radio band. In one example, this band may be 1800 MHz radio band of the LTE.

In an embodiment, the network element 102 provides an uplink communication for the terminal device 110 on a second radio band. In one example, this band may be 1800 MHz radio band of the LTE. The second radio band may be the shared radio band in the case the uplink radio band is shared. Thus, the network element 102 may request the second network element 112 to schedule radio resources on said band. The second network element 112 may further utilize a third radio band for downlink communication according to the second RAT (e.g., 3500 MHz band of the 5G). Additionally, or alternatively to using the shared radio band for 5G uplink, a fourth radio band (e.g., 3500 MHz) may also be utilized. It is well known for the skilled person how the different bands normally work. It is later described how the shared band's functionality may be realized. The first and second bands may be based on, for example, Frequency Division Duplex (FDD). The third and the fourth bands may be based on Time Division Duplex (TDD). However, in some cases if the network element 102 is a gNB, the first and second bands may be TDD and the third and fourth may be FDD.

However, the system may not necessarily be restricted to uplink band sharing. Hence, in an embodiment, the first radio band may additionally or alternatively be shared with the second RAT. Thus, for example, both 1800 MHz bands may be shared to provide shared uplink and downlink radio bands to be shared between the first and second RATs.

In an embodiment, the first radio access technology utilizes lower radio frequencies compared with the second radio access technology. That is, the radio bands used by the first RAT may be situated at lower frequencies compared with the radio bands of the second RAT. Thus, when the second RAT is able to utilize the lower frequency radio bands, the coverage may be increased.

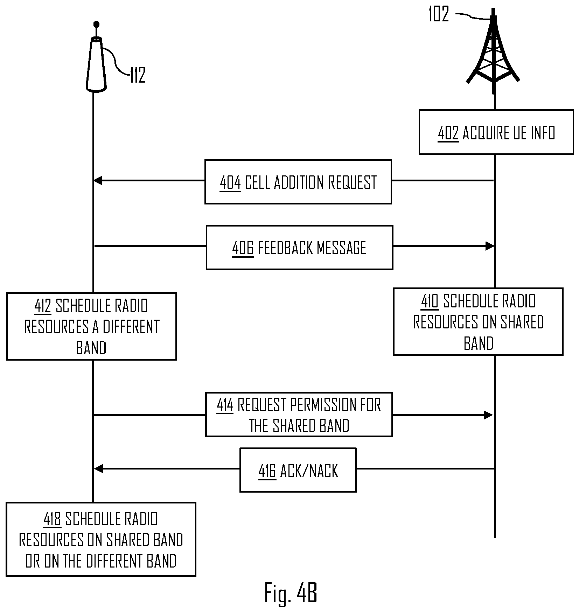

Let us then look on Figure 4B which illustrates a scenario in which the network element 102 decides to schedule radio resources on the shared radio band (i.e., band of the first RAT) by itself. Referring to Figure 4B, the information element of the cell addition request message (block 404) indicates that the first network element 102 schedules radio resources on the shared radio band for the terminal device 110. In block 406, the second network element 112 may either accept or decline the request by transmitting the feedback message. In the case that the first network element 102 schedules by itself radio resources on the shared band, the cell addition request may request that the second network element 112 provides radio resources on another band (i.e., radio band of the second RAT) to the terminal device 110. This may be similar to DC: in block 410 the network element 102 may schedule radio resources on a radio band of first RAT and in block 412 the second network element 112 may schedule radio resources on a radio band of the second RAT. The scheduling of block 412 may be performed if the cell addition request indicates that the network element 102 schedules on the shared radio band.

However, as the cell addition request indicates UE capability, the second network element 112 may now become aware that the shared band (i.e., the radio band of first RAT) can be used for second RAT communication. Hence, in block 412, the second network element 414 may transmit a message to the first network element 102, the message requesting a permission to schedule radio resources on the shared radio band of the first radio access technology for the terminal device 110; and upon receiving the permission (block 416), initiating scheduling radio resources on the shared radio band for the terminal device (block 418). In other words, the network element 102 may receive the message from the second network element (block 414); and upon granting the permission, indicate the permission to the second network element 112 (block 416).

The second network element 112 may be configured to determine whether or not to accept a cell addition request (e.g., block 404) based on one or more predetermined criterion. For example, if the second network element 112 is already serving at least a predetermined number of UEs or at least one measurement, by the second network element 112, indicates service level below a certain service level requirement, the second network element 112 may decline the request. This may happen, at least, for two different types of requests: one is that the second network element 112 is requested to schedule radio resources on the shared radio band and the other is that the second network element 112 is requested to schedule radio resources on a radio band of the second RAT (with the possibility to request permission for scheduling on the shared band, i.e., block 414). However, if the second network element 112 accepts the request, the scheduling may commence.

In an embodiment, the cell addition request (block 404) indicates whether or not the second network element 112 has a permission to transmit the request message (block 414).

In an embodiment, the network element 102 transmits the cell addition request message (block 404) only if a number of terminal devices, served by the first cell or the by the second cell, equals to or is below a predetermined threshold. I.e., the first cell may be provided by the network element 102 and the second cell may be provided by the second network element 112. It needs to be noted that there may be a plurality of second network element 112. Hence, there may be a plurality of second cells in the area of the first cell, for example. Thus, the network element 102 may transmit cell addition requests to more than one second network element 112.

Similarly, after receiving the request of block 414, the network element 102 may determine whether or not to accept the request. In an embodiment, if the number of terminal devices, served by the first cell or the by the second cell, equals to or is below a predetermined threshold (e.g., same threshold or a different threshold as described in the previous paragraph), the network element 102 accepts the request; otherwise, it may decline the request. This may mean that the radio band can be shared if there are not too many UEs already using radio resources on said radio band. Furthermore, in block 418, the second network element 112 may schedule radio resources for the terminal device on the shared band (if the permission is granted) and on the radio band of the second RAT (if the permission is not granted).

It further is noted that shared radio band may imply that it is always shared between the network elements 102, 112. However, in a case where the second network element 112 does not yet schedule radio resources for a terminal device or devices on said shared band, the band may thus not yet be shared. However, as it can be used for sharing between at least two different RATs, it may be described as a shared radio band. It is also noted that the shared band scheduling decision by the network element 102 may be performed per UE. Thus, all UEs may not necessarily be scheduled by the network element 102 or by the second network element 112. Hence, some UE(s) may be scheduled by the network element 102 and some UE(s) may be scheduled by the second network element 112 on the shared band.

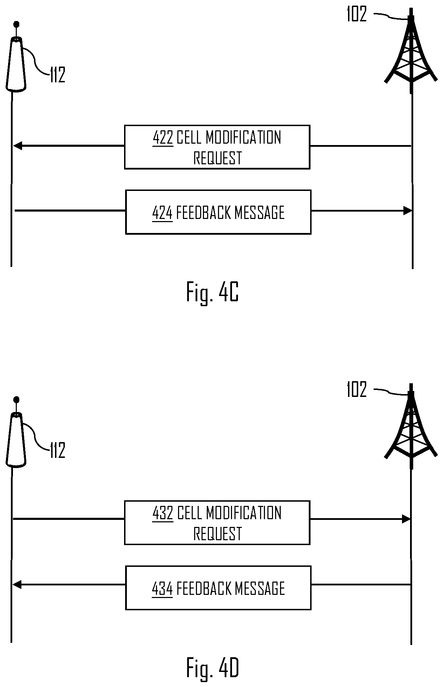

Referring to Figure 4C, the network element 102 may transmit a first modification request to the second network element 112 (block 422). The second network element 112 may receive the request. For example, the modification request may change the scheduler. E.g., if the network element 102 has initially scheduled radio resources on the shared band for the terminal device 110 and determines that this needs to be changed, the network element 102 may transmit the cell modification request which may request the second network element 112 to schedule resources on the shared band for the terminal device. Similarly, the scheduler of the radio resources on said shared band may be changed from the second network element 112 to the network element 102. Furthermore, the scheduler of the radio resources on said shared band may be changed from the second network element 112 to a different second network element (i.e., providing a cell according to the second RAT). Thus, for example, during handover (HO), the network element 102 may change the scheduling network element to the target network element.

In block 424, the second network element 112 may transmit a feedback message to the network element 102. The feedback message may indicate either ACK or NACK of the modification request. It needs to be noted that ACK in the context of this application may mean accepting the request whereas NACK may mean declining the request. Thus, ACK/NACK should not be confused with successful demodulation and such features commonly used in the context of communications.

Referring to Figure 4D, the second network element 112 may transmit a second modification request message requesting changing of the network element performing the scheduling (block 432). The network element 102 may receive the request and either accept or decline it by transmitting a feedback message (block 434). Upon granting the request, the network element 102 may transmit an ACK to the second network element 112.

In an embodiment, the second network element detects, on the basis of at least one predetermined criterion, a need to change the network element performing the scheduling on the shared radio band; and transmits to the network element 102, the second modification request message requesting changing of the network element performing the scheduling (block 432). The predetermined criterion may comprise, for example, radio conditions indicator(s) (e.g., Signal to Noise Ratio (SNR) or SNR+Interference (SINR)). Thus, for example, if radio conditions or some resource blocking prevents second network element 112 to schedule on the shared radio band, the cell modification request (block 432) may be transmitted. Another trigger may be a detected radio link failure or some other abnormal failure in a connection between the second network element 112 and the terminal device 110.

A further trigger may be a failed HO within the second RAT. That is, if the terminal device 110 is tried to be handed over to another second RAT network element, and the HO fails, this may trigger the second network element 112 to transmit the cell modification request to the network element 102. For example, in such case the scheduler could be requested to be the network element 102. However, in some cases the network element 102 may decide which entity should perform the scheduling. Similarly, the change may be triggered if the second network element 112 is already aware (i.e. without trying) that the HO will fail (e.g. target network element unable to perform radio band sharing).

In an embodiment, the cell addition request information is transferred to the target HO network element by the second network element 112 (i.e., inter RAT HO). The target HO network element may thus know which network element should schedule radio resources and on which radio band(s) for the terminal device 110.

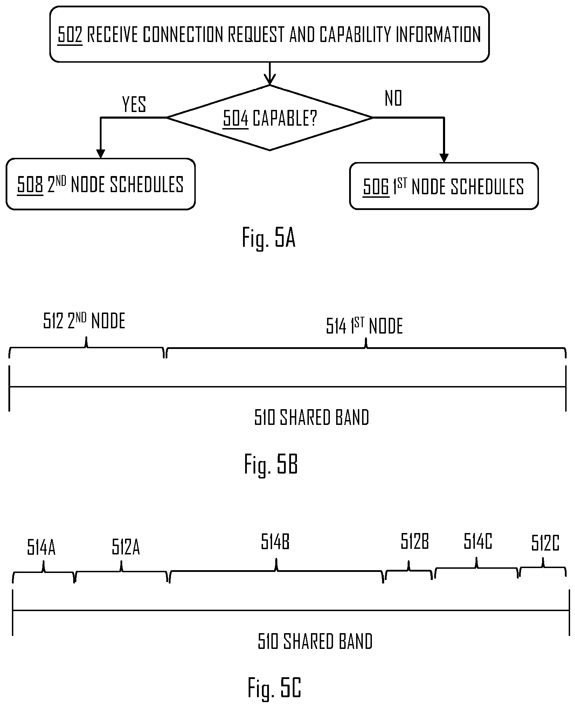

Figures 5A to 5C illustrate some further embodiments. Referring to Figure 5A, in block 502, the network element 102 may receive a connection request from a terminal device, such as the terminal device 110. The capability information may be comprised in the connection request. In block 504, based on the capability information, the network element 102 may determine whether the terminal device 110 is capable for the second RAT based communication (i.e., the network element 102 provides first RAT based communication). If yes, the process may continue to block 508. If no, the process may continue to block 506. In block 506, the network element 102 may configure the system such that the network element 102 performs the scheduling on the shared radio band for the terminal device 110. This may mean, for example, that the cell addition request is transmitted indicating the network element 102 as the scheduler. In block 508, the network element 102 may configure the system such that the second network element 112 performs the scheduling on the shared radio band for the terminal device 110. This may mean, for example, that the cell addition request is transmitted indicating the second network element 112 as the scheduler.

Referring now to Figure 5B, the cell addition request message (e.g., block 404) further comprises an information element indicating a subpart 512 of the shared radio band 510. The second network element 112 may be requested to schedule radio resources on said subpart 512 for the terminal device 110. However, if the scheduler is the network element 102, said subpart 512 may be used by the network element 102. Also, the network element 102 may use, at least in some embodiments, some other part of the shared band 510 for scheduling radio resources. A subpart (e.g., 512 or 514) may refer, for example, to a part of radio frequency spectrum of the shared radio band 510. Hence, in such case, simultaneous transmissions on the same band 510 but utilizing different subparts may be possible (e.g., second network element 112 schedules radio resources from subpart 514 and the network element schedules from subpart 512). In general, phrase schedule radio resources on a radio band or on a subpart of a radio band means scheduling radio resources from said band or from said subpart.

In an embodiment, the other part 514 of the shared radio band 510 can be used for scheduling radio resources for different terminal devices. For example, the network element 102 may use the subpart 514 for scheduling first RAT UEs, whereas the subpart 512 may be used for scheduling radio resources, by the second network element 112, for second RAT UEs.

In the case that cell addition request indicates that the network element 102 schedules the radio resources, the cell addition request may not necessarily comprise the indication of the subpart 512. However, if the second network element 112 requests the scheduling permission, the subpart 512 may be indicated if the permission is granted. This can be indicated in message transmitted in block 416, for example. Hence, the message of block 416 may be same or similar to the cell addition request message of block 404 with the difference that the other is triggered by determining UE capability and the other is triggered by receiving the request from the second network element 112 which is granted. In case of ACK, the subpart may thus be indicated in block 416.

It is further noted that the cell modification request message (block 422) may also indicate the subpart 512 or some other subpart. For example, referring to Figure 5C, the network element 102 may first configure the second network element 112 to schedule radio resources on subpart 512A which may be indicated in the cell addition request. For example, the cell modification request message may indicate a different subpart 512B. Hence, the second network element 112 may continue by scheduling radio resources from said subpart 512B after receiving the cell modification request.

In an embodiment, the network element 102 receives a connection request from another terminal device (e.g., terminal device 120) and determines to schedule radio resources on some other subpart 514 of said radio band 510 for said another terminal device. The radio band 510 may be the shared radio band (i.e., radio band of the first RAT). In an embodiment, the network element 102 determines to schedule said radio resources on said some other subpart 514 for said another terminal device based at least partly on determining that said another terminal device is incapable of utilizing the second radio access technology-based communication. For example, said another terminal device may be an LTE UE whereas second RAT may be 5G (and first RAT may be LTE).

In an embodiment, the subpart 512 is predefined. In such case, the subpart 512 may be a shared portion of a predefined shared radio band 510. This may be referred to as dynamic sharing.

In an embodiment, the subpart 512 is determined by the network element 102. For example, the system may be configured to initially support sharing of a certain radio band. The network element 102 may be further configured to determine certain subpart(s) (i.e., subband(s)) of the radio band which it may then indicate as a part of the cell addition request message to the second network element 112.

In an embodiment, the network element is configured to determine the subpart 512 of the shared band 510 based on one or more rules (e.g., an algorithm). For example, the more there are UEs (detected and/or served by the network element 102 and/or served by the second network element 112), the more band (i.e., bigger subpart) is allocated to the second network element 112. For example, if a first UE is scheduled by the second network element 112, the network element 102 may allocate a certain band portion (i.e., subpart) for the scheduling. However, if a second UE is also to be scheduled by the second network element 112, the network element 102 may increase said subpart (or give an additional subpart) for the scheduling by the second network element 112. That is, as the number of UEs scheduled by the second network element 112 increases, more radio band of the shared radio band 510 may be allocated, by the network element 102, to the second network element 112.

It further needs to be noted that the subpart 512 may comprise one or more parts 512A-C which may be non-adjacent or adjacent to each other. This may also mean that there may be a plurality of subparts 514A-C, for example.

In an embodiment, the network element and the second network element 112 communicate with each other via the Xx interface 190 (e.g., X2 Interface).

In an embodiment, the scheduler is selected exclusively. This may mean that either one of (but not both) may schedule radio resources on the shared band for the terminal device.

In an embodiment, the network element 102 configures the second network element 112 as the scheduler with a higher priority compared with the network element 102 selection as the scheduler.

In an embodiment, shared radio band 510 is associated with a radio band identifier of Radio Resource Control (RRC) signalling. The shared radio band 510 may be indicated, for example, by the network element 102 to the second network element 112 using RRC signalling.

In an embodiment, at least one of the cell addition request message (block) and cell modification request (block 422) are transmitted according to RRC protocol. In such case, other message transmitted between the network element and/or UEs may also be RRC protocol-based messages or signals.

In an embodiment, the first RAT (i.e., utilized by the network element 102) is different to the second RAT (i.e., utilized by the second network element 112). For example, first RAT may be LTE and second RAT may be 5G, or vice versa. In an embodiment, the network element 102 is incapable of utilizing the second RAT. In an embodiment, the second network element 112 is incapable of utilizing the first RAT. Hence, the radio band sharing may be especially beneficial to increase coverage.

In an embodiment, the cellular communication system comprises at least two (i.e., a plurality) of network elements of the second RAT. For example, there may be one first RAT network element 102 (e.g., LTE) and a plurality of second RAT network elements 112, 122 (e.g., 5G). Hence, the shared radio band 510 may be shared between one or more first RAT network elements and two or more second RAT network elements 112,122. The sharing may be controlled by the network element 102, for example. This controlling may be beneficial, for example, if cells 114, 124 are at least partially overlapping and thus it may be beneficial to use different portions of the shared radio band by the network element 112 and network element 122.

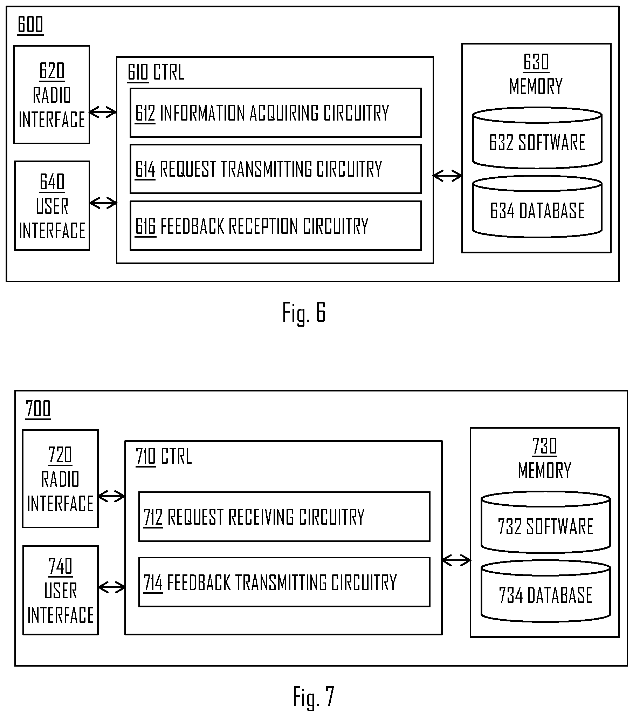

Figures 6 to 7 provide apparatuses 600, 700 comprising a control circuitry (CTRL) 610, 710, such as at least one processor, and at least one memory 630, 730 including a computer program code (software) 632, 732, wherein the at least one memory and the computer program code (software) 632, 732, are configured, with the at least one processor, to cause the respective apparatus 600, 700 to carry out any one of the embodiments of Figures 1 to 5C, or operations thereof.

Referring to Figures 6 to 7, the memory 630, 730, may be implemented using any suitable data storage technology, such as semiconductor-based memory devices, flash memory, magnetic memory devices and systems, optical memory devices and systems, fixed memory and removable memory. The memory 630, 730 may comprise a database 634, 734 for storing data.

The apparatuses 600, 700 may further comprise radio interface (TRX) 620, 720 comprising hardware and/or software for realizing communication connectivity according to one or more communication protocols. The TRX may provide the apparatus with communication capabilities to access the radio access network, for example. The TRX may comprise standard well-known components such as an amplifier, filter, frequency-converter, (de)modulator, and encoder/decoder circuitries and one or more antennas. For example, the TRX may enable communication between the terminal device 110 and the network element 102. Further, the TRX may provide access to the Xx-interface 190 by the network element 102 and/or by the second network element 112, for example.

The apparatuses 600, 700 may comprise user interface 640, 740 comprising, for example, at least one keypad, a microphone, a touch display, a display, a speaker, etc. The user interface 640, 740 may be used to control the respective apparatus by a user of the apparatus 600, 700. For example, a network element may be configured using the user interface comprised in said network element. Naturally, a terminal device may comprise a user interface.

In an embodiment, the apparatus 600 may be or be comprised in a base station (also called a base transceiver station, a Node B, a radio network controller, or an evolved Node B, for example). The apparatus 600 may be the network element 102, for example. Further, the apparatus 600 may be the first network element performing the steps of Figure 2. In an embodiment, the apparatus 600 is comprised in the network element 102. In an embodiment, the apparatus 600 is configured to enable communication according to the first RAT (e.g., LTE or 5G).

Referring to Figure 6, the control circuitry 610 comprises an information acquiring circuitry 612 configured to acquire information about a terminal device of a cellular communication system; a request transmitting circuitry 614 configured to transmit, upon determining based on the acquired information that the terminal device is capable of utilizing a second radio access technology based communication, a cell addition request message to a second network element providing a second cell of the cellular communication system, the second cell being a second radio access technology cell, wherein the cell addition request message indicates that the terminal device is capable of utilizing the second radio access technology based communication, and wherein the cell addition request message comprises an information element either indicating that a first network element of the cellular communication system schedules radio resources on a radio band of the first radio access technology for the terminal device or requesting the second network element to schedule radio resources on said radio band for the terminal device; and a feedback reception circuitry 616 configured to initiate reception of a feedback message indicating whether the second network element accepts a cell addition request indicated in the cell addition request message.

In an embodiment, the apparatus 700 may be or be comprised in a base station (also called a base transceiver station, a Node B, a radio network controller, or an evolved Node B, for example). The apparatus 700 may be the second network element 112, for example. Further, the apparatus 700 may be the second network element performing the steps of Figure 3. In an embodiment, the apparatus 700 is comprised in the second network element 112. In an embodiment, the apparatus 700 is configured to enable communication according to the second RAT (e.g., LTE or 5G).

Referring to Figure 7, the control circuitry 710 may comprise a request receiving circuitry 712 configured to receive a cell addition request message from a first network element providing a first cell of the cellular communication system, the first cell being a first radio access technology cell and a second cell being a second radio access technology cell provided by a second network element of the cellular communication system, wherein the cell addition request message indicates that the terminal device is capable of utilizing the second radio access technology based communication, and wherein the cell addition request message comprises an information element either indicating that the first network element schedules radio resources on a radio band of the first radio access technology for the terminal device or requesting the second network element to schedule radio resources on said radio band for the terminal device; and a feedback transmitting circuitry 714 configured to transmit a feedback message to the first network element, the feedback message indicating either acknowledgement or negative-acknowledgement of a cell addition request indicated in the received cell addition request message. As indicated above, ACK may mean that the request is accepted whereas NACK may mean that the request is declined.

In an embodiment, at least some of the functionalities of the apparatus 600, 700 may be shared between two physically separate devices, forming one operational entity. Therefore, the apparatus 600, 700 may be seen to depict the operational entity comprising one or more physically separate devices for executing at least some of the described processes. Thus, the apparatus 600, 700 utilizing such shared architecture, may comprise a remote-control unit (RCU), such as a host computer or a server computer, operatively coupled (e.g. via a wireless or wired network) to a remote radio head (RRH) located in the base station or network element. In an embodiment, at least some of the described processes may be performed by the RCU. In an embodiment, the execution of at least some of the described processes may be shared among the RRH and the RCU.

In an embodiment, the RCU may generate a virtual network through which the RCU communicates with the RRH. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (i.e. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

As used in this application, the term 'circuitry' refers to all of the following: (a) hardware-only circuit implementations, such as implementations in only analogue and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 1 to 5C may be carried out by an apparatus comprising corresponding means for carrying out at least some of the described processes. Some example means for carrying out the processes may include at least one of the following: detector, processor, (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1 to 5C or operations thereof.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of Figures 1 to 5C, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1 to 5C may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art. In an embodiment, a computer-readable medium comprises said computer program.

It also needs to be noted that the network element 102 may also be referred to as a node or radio node of a cellular communication system. Similarly, the second network element 112 may also be referred to as a node or radio node of a cellular communication system.

## Claims

1. A method comprising:
Acquiring (402), by a first network element (102) providing a first cell (104) of a cellular communication system, information about a terminal device (110) of the cellular communication system, the first (104) cell being a first radio access technology cell;
upon determining, based on the acquired information, that the terminal device (110) is capable (504) of utilizing a second radio access technology-based communication, transmitting a cell addition request message (404) to a second network element (112) providing a second cell (114) of the cellular communication system, the second cell (114) being a second radio access technology cell,
wherein the cell addition request message (404) indicates that the terminal device (110) is capable (504) of utilizing the second radio access technology-based communication,
and wherein the cell addition request message (404) comprises an information element either indicating that the first network element (102) schedules radio resources on a radio band (510) of the first radio access technology for the terminal device (110) or requesting the second network element (112) to schedule radio resources on said radio band (510) for the terminal device (110); and
initiating reception of a feedback message (406) indicating whether the second network element (112) accepts a cell addition request indicated in the cell addition request message (404);
**characterized by**:
wherein if the information element of the cell addition request message (404) indicates that the first network element (102) schedules radio resources on said radio band (510) for the terminal device (110), the method further comprising:
receiving a message (414), from the second network element (112), the message requesting a permission to schedule radio resources on said radio band for the terminal device (110); and
upon granting the permission, indicating the permission (416) to the second network element (112).

2. The method of claim 1, wherein the cell addition request message (404) further comprises an information element indicating a subpart (512) of said radio band (510), wherein the second network element (112) is requested to schedule radio resources on said subpart (512) for the terminal device (110).

3. The method of claim 1 or 2, wherein said radio band (510) is an uplink radio band.

4. The method of any preceding claim, wherein the first radio access technology utilizes lower radio frequencies compared with the second radio access technology.

5. The method of any preceding claim, further comprising:
transmitting the cell addition request message only if a number of terminal devices, served by the first cell or the by the second cell, equals to or is below a predetermined threshold.

6. The method of any preceding claim, wherein if the information element of the cell addition request message requests the second network element to schedule radio resources on said radio band (510) for the terminal device (110), the method further comprising:
in response to receiving feedback information indicating negative acknowledgement of the cell addition request, initiating scheduling radio resources on said radio band (510) for the terminal device (110) and/or initiating transmission of a second cell addition request message requesting the second network element to provide radio resources on a radio band of the second radio access technology for the terminal device (110).

7. The method of any preceding claim, further comprising:
receiving a connection request from another terminal device; and
scheduling radio resources on some other subpart of said radio band (510) for said another terminal device.

8. The method of claim 7, further comprising:
determining to schedule, by the first network element (102), said radio resources on said some other subpart of said radio band (510) for said another terminal device based at least partly on determining that said another terminal device is incapable of utilizing the second radio access technology-based communication.

9. The method of any preceding claim, further comprising:
receiving, from the second network element (112), a modification request message (432) requesting changing of the network element performing the scheduling;
upon granting the request, transmitting an acknowledgement (434) to the second network element.

10. A method comprising:
Receiving, by a second network element (112) providing a second cell (114) of a cellular communication system, a cell addition request message (404) from a first network element (102) providing a first cell (104) of the cellular communication system, the first cell (104) being a first radio access technology cell and the second cell (114) being a second radio access technology cell,
wherein the cell addition request message (404) indicates that the terminal device (110) is capable of utilizing the second radio access technology-based communication,
and wherein the cell addition request message (404) comprises an information element either indicating that the first network element (102) schedules radio resources on a radio band (510) of the first radio access technology for the terminal device (110) or requesting the second network element (112) to schedule radio resources on said radio band (510) for the terminal device (110);
transmitting a feedback message (406) to the first network element (102), the feedback message (406) indicating either acknowledgement or negative acknowledgement of a cell addition request indicated in the received cell addition request message (404);
**characterized by**:
transmitting a message (414) to the first network element (102), the message (414) requesting a permission to schedule radio resources on said radio band (510) of the first radio access technology for the terminal device (110); and
upon receiving the permission (416), initiating scheduling radio resources on said radio band for the terminal device (110).

11. The method of claim 10, wherein the cell addition request message (404) further comprises an information element indicating a subpart of said radio band (510).

12. The method of claim 10 or 11, wherein said radio band (510) is an uplink radio band.

13. The method of any preceding claim 10 to 12, wherein if the information element of the cell addition request message (404) requests the second network element (112) to schedule radio resources on said radio band (510) for the terminal device (110), the method further comprising:
initiating scheduling radio resources on said radio band for the terminal device (110).

14. The method of any preceding claim 10 to 13, wherein if the information element of the cell addition request message (404) indicates that the first network element (102) schedules radio resources on said radio band (510) for the terminal device (110), the method further comprising:
initiating scheduling radio resources on a radio band of the second radio access technology for the terminal device (110).

15. The method of any preceding claim 10 to 14, further comprising:
detecting, on the basis of at least one predetermined criterion, a need to change the network element performing the scheduling on said radio band; and
transmitting, to the first network element (102), a modification request message (432) requesting changing of the network element performing the scheduling.

16. An apparatus comprising at least one processor and at least one memory including a computer program code, wherein the at least one memory and the computer program code are configured, with the at least one processor, to cause a first network element (102) providing a first cell (104) of a cellular communication system, to perform operations comprising:
acquiring information (402) about a terminal device (110) of the cellular communication system, the first cell (104) being a first radio access technology cell;
upon determining, based on the acquired information, that the terminal device (110) is capable of utilizing a second radio access technology-based communication, transmitting a cell addition request message (404) to a second network element (112) providing a second cell (114) of the cellular communication system, the second cell (114) being a second radio access technology cell,
wherein the cell addition request message (404) indicates that the terminal device (110) is capable of utilizing the second radio access technology-based communication,
and wherein the cell addition request message (404) comprises an information element either indicating that the first network element (102) schedules radio resources on a shared radio band (510) of the first radio access technology for the terminal device (110) or requesting the second network element (112) to schedule radio resources on said radio band (510) for the terminal device (110); and
initiating reception of a feedback message (406) indicating whether the second network element (112) accepts a cell addition request indicated in the cell addition request message (404);
**characterized by**: If
wherein if the information element of the cell addition request message (404) indicates that the first network element (102) schedules radio resources on said radio band (510) for the terminal device (110), the method further comprising:
receiving a message (414) from the second network element (112), the message requesting a permission to schedule radio resources on said radio band (510) for the terminal device (110); and
upon granting the permission, indicating the permission (416) to the second network element (112, 122).

17. An apparatus comprising at least one processor and at least one memory including a computer program code, wherein the at least one memory and the computer program code are configured, with the at least one processor, to cause a second network element (112) providing a second cell (114) of a cellular communication system, to perform operations comprising:
receiving a cell addition request message (404) from a first network element (102) providing a first cell (104) of the cellular communication system, the first cell being a first radio access technology cell and the second cell (114) being a second radio access technology cell,
wherein the cell addition request message indicates that the terminal device (110) is capable of utilizing the second radio access technology-based communication,
and wherein the cell addition request message (404) comprises an information element either indicating that the first network element (102) schedules radio resources on a radio band (510) of the first radio access technology for the terminal device (110) or requesting the second network element (112) to schedule radio resources on said radio band (510) for the terminal device (110); and
**characterized by**:
transmitting a feedback message (406) to the first network element (102), the feedback message (406) indicating either acknowledgement or negative acknowledgement of a cell addition request indicated in the received cell addition request message (404);
transmitting a message (414) to the first network element (102), the message (414) requesting a permission to schedule radio resources on said radio band (510) of the first radio access technology for the terminal device (110); and upon receiving the permission (416), initiating scheduling radio resources on said radio band for the terminal device (110)

## Patentansprüche

1. Verfahren, das Folgendes umfasst:
Erfassen (402) von Informationen über eine Endgerätevorrichtung (110) eines zellularen Kommunikationssystems, durch ein erstes Netzwerkelement (102), das eine erste Zelle (104) des zellularen Kommunikationssystems bereitstellt, wobei die erste Zelle (104) eine Zelle einer ersten Funkzugangstechnologie ist;
nach Bestimmen auf Basis der erfassten Informationen, dass die Endgerätevorrichtung (110) in der Lage ist (504) ist, eine Kommunikation auf Basis einer zweiten Funkzugangstechnologie zu nutzen, Übertragen einer Zellhinzufügungsanforderungsnachricht (404) zu einem zweiten Netzwerkelement (112), das eine zweite Zelle (114) des zellularen Kommunikationssystems bereitstellt, wobei die zweite Zelle (114) eine Zelle einer zweiten Funkzugangstechnologie ist,
wobei die Zellhinzufügungsanforderungsnachricht (404) anzeigt, dass die Endgerätevorrichtung (110) in der Lage ist (504), die Kommunikation auf Basis der zweiten Funkzugangstechnologie zu nutzen,
und wobei die Zellhinzufügungsanforderungsnachricht (404) ein Informationselement umfasst, das entweder anzeigt, dass das erste Netzwerkelement (102) Funkressourcen auf einem Funkband (510) der ersten Funkzugangstechnologie für die Endgerätevorrichtung (110) plant oder anfordert, dass das zweite Netzwerkelement (112) Funkressourcen auf dem Funkband (510) für die Endgerätevorrichtung (110) plant; und
Initiieren eines Empfangs einer Rückmeldungsnachricht (406), die anzeigt, ob das zweite Netzwerkelement (112) eine in der Zellhinzufügungsanforderungsnachricht (404) angezeigte Zellhinzufügungsanforderung akzeptiert;
**gekennzeichnet durch**:
wobei, wenn das Informationselement der Zellhinzufügungsanforderungsnachricht (404) anzeigt, dass das erste Netzwerkelement (102) Funkressourcen auf dem Funkband (510) für die Endgerätevorrichtung (110) plant, das Verfahren ferner Folgendes umfasst:
Empfangen einer Nachricht (414) vom zweiten Netzwerkelement (112), wobei die Nachricht eine Erlaubnis zum Planen von Funkressourcen auf dem Funkband für die Endgerätevorrichtung (110) anfordert; und
nach Gewähren der Erlaubnis Anzeigen der Erlaubnis (416) für das zweite Netzwerkelement (112).

2. Verfahren nach Anspruch 1, wobei die Zellhinzufügungsanforderungsnachricht (404) ferner ein Informationselement umfasst, das einen Unterteil (512) des Funkbands (510) anzeigt, wobei angefordert wird, dass das zweite Netzwerkelement (112) Funkressourcen auf dem Unterteil (512) für die Endgerätevorrichtung (110) plant.

3. Verfahren nach Anspruch 1 oder 2, wobei das Funkband (510) ein Uplinkfunkband ist.

4. Verfahren nach einem der vorhergehenden Ansprüche, wobei die erste Funkzugangstechnologie verglichen mit der zweiten Funkzugangstechnologie niedrigere Funkfrequenzen nutzt.

5. Verfahren nach einem der vorhergehenden Ansprüche, das ferner Folgendes umfasst:
Übertragen der Zellhinzufügungsanforderungsnachricht nur, wenn eine Anzahl von Endgerätevorrichtungen, die von der ersten Zelle oder von der zweiten Zelle bedient werden, gleich einem vorbestimmten Schwellwert ist oder unter demselben liegt.

6. Verfahren nach einem der vorhergehenden Ansprüche, wobei, wenn das Informationselement der Zellhinzufügungsanforderungsnachricht anfordert, dass das zweite Netzwerkelement Funkressourcen auf dem Funkband (510) für die Endgerätevorrichtung (110) plant, das Verfahren ferner Folgendes umfasst:
in Reaktion auf das Empfangen von Rückmeldungsinformationen, die eine Negativbestätigung der Zellhinzufügungsanforderung anzeigen, Initiieren des Planens von Funkressourcen auf dem Funkband (510) für die Endgerätevorrichtung (110) und/oder Initiieren einer Übertragung einer zweiten Zellhinzufügungsanforderungsnachricht, die anfordert, dass das zweite Netzwerkelement Funkressourcen auf einem Funkband der zweiten Funkzugangstechnologie für die Endgerätevorrichtung (110) bereitstellt.

7. Verfahren nach einem der vorhergehenden Ansprüche, das ferner Folgendes umfasst:
Empfangen einer Verbindungsanforderung von einer anderen Endgerätevorrichtung; und
Planen von Funkressourcen auf einem anderen Unterteil des Funkbands (510) für die andere Endgerätevorrichtung.

8. Verfahren nach Anspruch 7, das ferner Folgendes umfasst:
Bestimmen, die Funkressourcen auf dem anderen Unterteil des Funkbands (510) für die andere Endgerätevorrichtung zu planen, durch das erste Netzwerkelement (102) mindestens teilweise auf Basis des Bestimmens, dass die andere Endgerätevorrichtung in der Lage ist, die Kommunikation der zweiten Funkzugangstechnologie zu nutzen.

9. Verfahren nach einem der vorhergehenden Ansprüche, das ferner Folgendes umfasst:
Empfangen einer Modifikationsanforderungsnachricht (432), die das Ändern des Netzwerkelements, das das Planen durchführt, anfordert, vom zweiten Netzwerkelement (112);
nach Gewähren der Anforderung Übertragen einer Bestätigung (434) zum zweiten Netzwerkelement.

10. Verfahren, das Folgendes umfasst:
Empfangen einer Zellhinzufügungsanforderungsnachricht (404) durch ein zweites Netzwerkelement (112), das eine zweite Zelle (114) eines zellularen Kommunikationssystems bereitstellt, von einem ersten Netzwerkelement (102), das eine erste Zelle (104) des zellularen Kommunikationssystems bereitstellt, wobei die erste Zelle (104) eine Zelle einer ersten Funkzugangstechnologie ist und die zweite Zelle (114) eine Zelle einer zweiten Funkzugangstechnologie ist,
wobei die Zellhinzufügungsanforderungsnachricht (404) anzeigt, dass die Endgerätevorrichtung (110) in der Lage ist, die Kommunikation der zweiten Funkzugangstechnologie zu nutzen,
und wobei die Zellhinzufügungsanforderungsnachricht (404) ein Informationselement umfasst, das entweder anzeigt, dass das erste Netzwerkelement (102) Funkressourcen auf einem Funkband (510) der ersten Funkzugangstechnologie für die Endgerätevorrichtung (110) plant, oder anfordert, dass das zweite Netzwerkelement (112) Funkressourcen auf dem Funkband (510) für die Endgerätevorrichtung (110) plant;
Übertragen einer Rückmeldungsnachricht (406) zum ersten Netzwerkelement (102), wobei die Rückmeldungsnachricht (406) entweder eine Bestätigung oder eine Negativbestätigung der in der empfangenen Zellhinzufügungsanforderungsnachricht (404) angezeigten Zellhinzufügungsanforderung anzeigt;
**gekennzeichnet durch**:
Übertragen einer Nachricht (414) zum ersten Netzwerkelement (102), wobei die Nachricht (414) eine Erlaubnis zum Planen von Funkressourcen auf dem Funkband (510) der ersten Funkzugangstechnologie für die Endgerätevorrichtung (110) anfordert; und
nach Empfangen der Erlaubnis (416) Initiieren des Planens von Funkressourcen auf dem Funkband für die Endgerätevorrichtung (110).

11. Verfahren nach Anspruch 10, wobei die Zellhinzufügungsanforderungsnachricht (404) ferner ein Informationselement umfasst, das einen Unterteil des Funkbands (510) anzeigt.

12. Verfahren nach Anspruch 10 oder 11, wobei das Funkband (510) ein Uplinkfunkband ist.

13. Verfahren nach einem der vorhergehenden Ansprüche 10 bis 12, wobei, wenn das Informationselement der Zellhinzufügungsanforderungsnachricht (404) anfordert, dass das zweite Netzwerkelement (112) Funkressourcen auf dem Funkband (510) für die Endgerätevorrichtung (110) plant, das Verfahren ferner Folgendes umfasst:
Initiieren des Planens von Funkressourcen auf dem Funkband für die Endgerätevorrichtung (110).

14. Verfahren nach einem der vorhergehenden Ansprüche 10 bis 13, wobei, wenn das Informationselement der Zellhinzufügungsanforderungsnachricht (404) anzeigt, dass das erste Netzwerkelement (102) Funkressourcen auf dem Funkband (510) für die Endgerätevorrichtung (110) plant, das Verfahren ferner Folgendes umfasst:
Initiieren des Planens von Funkressourcen auf einem Funkband der zweiten Funkzugangstechnologie für die Endgerätevorrichtung (110).

15. Verfahren nach einem der vorhergehenden Ansprüche 10 bis 14, das ferner Folgendes umfasst:
Detektieren einer Notwendigkeit zum Ändern des Netzwerkelements, das das Planen auf dem Funkband durchführt, auf Basis von mindestens einem vorbestimmten Kriterium; und
Übertragen einer Modifikationsanforderungsnachricht (432), die das Ändern des Netzwerkelements, das das Planen durchführt, anfordert, zum ersten Netzwerkelement (102).

16. Einrichtung, die mindestens einen Prozessor und mindestens einen Speicher umfasst, der einen Computerprogrammcode beinhaltet, wobei der mindestens eine Speicher und der Computerprogrammcode dazu ausgelegt sind, mit dem mindestens einen Prozessor zu bewirken, dass ein erstes Netzwerkelement (102), das eine erste Zelle (104) eines zellularen Kommunikationssystems bereitstellt, Operationen durchführt, die Folgendes umfassen:
Erfassen von Informationen (402) über eine Endgerätevorrichtung (110) des zellularen Kommunikationssystems, wobei die erste Zelle (104) eine Zelle einer ersten Funkzugangstechnologie ist;
nach Bestimmen auf Basis der erfassten Informationen, dass die Endgerätevorrichtung (110) in der Lage ist, eine Kommunikation einer zweiten Funkzugangstechnologie zu nutzen, Übertragen einer Zellhinzufügungsanforderungsnachricht (404) zu einem zweiten Netzwerkelement (112), das eine zweite Zelle (114) des zellularen Kommunikationssystems bereitstellt, wobei die zweite Zelle (114) eine Zelle einer zweiten Funkzugangstechnologie ist,
wobei die Zellhinzufügungsanforderungsnachricht (404) anzeigt, dass die Endgerätevorrichtung (110) in der Lage ist, die Kommunikation der zweiten Funkzugangstechnologie zu nutzen,
und wobei die Zellhinzufügungsanforderungsnachricht (404) ein Informationselement umfasst, das entweder anzeigt, dass das erste Netzwerkelement (102) Funkressourcen auf einem gemeinsam verwendeten Funkband (510) der ersten Funkzugangstechnologie für die Endgerätevorrichtung (110) plant, oder anfordert, dass das zweite Netzwerkelement (112) Funkressourcen auf dem Funkband (510) für die Endgerätevorrichtung (110) plant; und
Initiieren eines Empfangs einer Rückmeldungsnachricht (406), die anzeigt, ob das zweite Netzwerkelement (112) eine in der Zellhinzufügungsanforderungsnachricht (404) angezeigte Zellhinzufügungsanforderung akzeptiert;
**gekennzeichnet durch**:
wobei, wenn das Informationselement der Zellhinzufügungsanforderungsnachricht (404) anzeigt, dass das erste Netzwerkelement (102) Funkressourcen auf dem Funkband (510) für die Endgerätevorrichtung (110) plant, das Verfahren ferner Folgendes umfasst:
Empfangen einer Nachricht (414) vom zweiten Netzwerkelement (112), wobei die Nachricht eine Erlaubnis zum Planen von Funkressourcen auf dem Funkband (510) für die Endgerätevorrichtung (110) anfordert; und
nach Gewähren der Erlaubnis Anzeigen der Erlaubnis (416) für das zweite Netzwerkelement (112, 122).

17. Einrichtung, die mindestens einen Prozessor und mindestens einen Speicher umfasst, der einen Computerprogrammcode beinhaltet, wobei der mindestens eine Speicher und der Computerprogrammcode dazu ausgelegt sind, mit dem mindestens einen Prozessor zu bewirken, dass ein zweites Netzwerkelement (112), das eine zweite Zelle (114) eines zellularen Kommunikationssystems bereitstellt, Operationen durchführt, die Folgendes umfassen:
Empfangen einer Zellhinzufügungsanforderungsnachricht (404) von einem ersten Netzwerkelement (102), das eine erste Zelle (104) des zellularen Kommunikationssystems bereitstellt, wobei die erste Zelle eine Zelle einer ersten Funkzugangstechnologie ist und die zweite Zelle (114) eine Zelle einer zweiten Funkzugangstechnologie ist,
wobei die Zellhinzufügungsanforderungsnachricht anzeigt, dass die Endgerätevorrichtung (110) in der Lage ist, die Kommunikation der zweiten Funkzugangstechnologie zu nutzen,
und wobei die Zellhinzufügungsanforderungsnachricht (404) ein Informationselement umfasst, das entweder anzeigt, dass das erste Netzwerkelement (102) Funkressourcen auf einem Funkband (510) der ersten Funkzugangstechnologie für die Endgerätevorrichtung (110) plant oder anfordert, dass das zweite Netzwerkelement (112) Funkressourcen auf dem Funkband (510) für die Endgerätevorrichtung (110) plant; und
**gekennzeichnet durch**:
Übertragen einer Rückmeldungsnachricht (406) zum ersten Netzwerkelement (102), wobei die Rückmeldungsnachricht (406) entweder eine Bestätigung oder eine Negativbestätigung der in der empfangenen Zellhinzufügungsanforderungsnachricht (404) angezeigten Zellhinzufügungsanforderung anzeigt;
Übertragen einer Nachricht (414) zum ersten Netzwerkelement (102), wobei die Nachricht (414) eine Erlaubnis zum Planen von Funkressourcen auf dem Funkband (510) der ersten Funkzugangstechnologie für die Endgerätevorrichtung (110) anfordert; und nach Empfangen der Erlaubnis (416) Initiieren des Planens von Funkressourcen auf dem Funkband für die Endgerätevorrichtung (110).

## Revendications

1. Procédé comprenant :
l'acquisition (402), par un premier élément de réseau (102) fournissant une première cellule (104) d'un système de communication cellulaire, d'informations sur un dispositif terminal (110) du système de communication cellulaire, la première cellule (104) étant une cellule de première technologie d'accès radio ;
en déterminant, sur la base des informations acquises, que le dispositif terminal (110) est en mesure (504) d'utiliser une deuxième communication basée sur une technologie d'accès radio, la transmission d'un message de demande d'ajout de cellule (404) à un deuxième élément de réseau (112) fournissant une deuxième cellule (114) du système de communication cellulaire, la deuxième cellule (114) étant une cellule de deuxième technologie d'accès radio,
dans lequel le message de demande d'ajout de cellule (404) indique que le dispositif terminal (110) est en mesure (504) d'utiliser la deuxième communication basée sur une technologie d'accès radio,
et dans lequel le message de demande d'ajout de cellule (404) comprend un élément d'information qui, soit indique que le premier élément de réseau (102) planifie des ressources radio sur une bande radio (510) de la première technologie d'accès radio pour le dispositif terminal (110), soit demande au deuxième élément de réseau (112) de planifier des ressources radio sur ladite bande radio (510) pour le dispositif terminal (110) ; et
l'initiation de la réception d'un message de rétroaction (406) indiquant si le deuxième élément de réseau (112) accepte une demande d'ajout de cellule indiquée dans le message de demande d'ajout de cellule (404) ;
**caractérisé par** :
dans lequel si l'élément d'information du message de demande d'ajout de cellule (404) indique que le premier élément de réseau (102) planifie des ressources radio sur ladite bande radio (510) pour le dispositif terminal (110), le procédé comprend en outre :
la réception d'un message (414) du deuxième élément de réseau (112), le message demandant une permission de planifier des ressources radio sur ladite bande radio pour le dispositif terminal (110) ; et
sur octroi de la permission, l'indication de la permission (416) au deuxième élément de réseau (112).

2. Procédé selon la revendication 1, dans lequel le message de demande d'ajout de cellule (404) comprend en outre un élément d'information indiquant une sous-partie (512) de ladite bande radio (510), dans lequel une planification des ressources radio sur ladite sous-partie (512) pour le dispositif terminal (110) est demandée au deuxième élément de réseau (112).

3. Procédé selon la revendication 1 ou 2, dans lequel ladite bande radio (510) est une bande radio de liaison montante.

4. Procédé selon l'une quelconque des revendications précédentes, dans lequel la première technologie d'accès radio utilise des fréquences radio plus basses comparativement à la deuxième technologie d'accès radio.

5. Procédé selon l'une quelconque des revendications précédentes, comprenant en outre :
la transmission du message de demande d'ajout de cellule uniquement si le nombre de dispositifs terminaux desservis par la première cellule ou par la deuxième cellule est égal ou inférieur à un seuil prédéterminé.

6. Procédé selon l'une quelconque des revendications précédentes, dans lequel si l'élément d'information du message de demande d'ajout de cellule demande au deuxième élément de réseau de planifier des ressources radio sur ladite bande radio (510) pour le dispositif terminal (110), le procédé comprend en outre :
en réponse à la réception d'informations de rétroaction indiquant un accusé de réception négatif de la demande d'ajout de cellule, l'initiation d'une planification de ressources radio sur ladite bande radio (510) pour le dispositif terminal (110) et/ou l'initiation d'une transmission d'un deuxième message de demande d'ajout de cellule demandant au deuxième élément de réseau de fournir des ressources radio sur une bande radio de la deuxième technologie d'accès radio pour le dispositif terminal (110).

7. Procédé selon l'une quelconque des revendications précédentes, comprenant en outre :
la réception d'une demande de connexion d'un autre dispositif terminal ; et
la planification de ressources radio sur une autre sous-partie de ladite bande radio (510) pour ledit autre dispositif terminal.

8. Procédé selon la revendication 7, comprenant en outre :
la détermination de la planification, par le premier élément de réseau (102), desdites ressources radio sur ladite autre sous-partie de ladite bande radio (510) pour ledit autre dispositif terminal en se basant au moins en partie sur la détermination du fait que ledit autre dispositif terminal n'est pas en mesure d'utiliser la deuxième communication basée sur une technologie d'accès radio.

9. Procédé selon l'une quelconque des revendications précédentes, comprenant en outre :
la réception, du deuxième élément de réseau (112), d'un message de demande de modification (432) demandant de changer l'élément de réseau réalisant la planification ;
sur octroi de la demande, la transmission d'un accusé de réception (434) au deuxième élément de réseau.

10. Procédé comprenant :
la réception, par un deuxième élément de réseau (112) fournissant une deuxième cellule (114) d'un système de communication cellulaire, d'un message de demande d'ajout de cellule (404) à partir d'un premier élément de réseau (102) fournissant une première cellule (104) du système de communication cellulaire, la première cellule (104) étant une cellule de première technologie d'accès radio, et la deuxième cellule (114) étant une cellule de deuxième technologie d'accès radio,
dans lequel le message de demande d'ajout de cellule (404) indique que le dispositif terminal (110) est en mesure d'utiliser la deuxième communication basée sur une technologie d'accès radio,
et dans lequel le message de demande d'ajout de cellule (404) comprend un élément d'information qui, soit indique que le premier élément de réseau (102) planifie des ressources radio sur une bande radio (510) de la première technologie d'accès radio pour le dispositif terminal (110), soit demande au deuxième élément de réseau (112) de planifier des ressources radio sur ladite bande radio (510) pour le dispositif terminal (110) ;
la transmission d'un message de rétroaction (406) au premier élément de réseau (102), le message de rétroaction (406) indiquant soit un accusé de réception soit un accusé de réception négatif d'une demande d'ajout de cellule indiquée dans le message de demande d'ajout de cellule (404) reçu ;
**caractérisé par** :
la transmission d'un message (414) au premier élément de réseau (102), le message (414) demandant une permission de planifier des ressources radio sur ladite bande radio (510) de la première technologie d'accès radio pour le dispositif terminal (110) ; et
à la réception de la permission (416), l'initiation de la planification de ressources radio sur ladite bande radio pour le dispositif terminal (110).

11. Procédé selon la revendication 10, dans lequel le message de demande d'ajout de cellule (404) comprend en outre un élément d'information indiquant une sous-partie de ladite bande radio (510).

12. Procédé selon la revendication 10 ou 11, dans lequel ladite bande radio (510) est une bande radio de liaison montante.

13. Procédé selon l'une quelconque des revendications précédentes 10 à 12, dans lequel si l'élément d'information du message de demande d'ajout de cellule (404) demande au deuxième élément de réseau (112) de planifier des ressources radio sur ladite bande radio (510) pour le dispositif terminal (110), le procédé comprend en outre :
l'initiation de la planification de ressources radio sur ladite bande radio pour le dispositif terminal (110).

14. Procédé selon l'une quelconque des revendications précédentes 10 à 13, dans lequel si l'élément d'information du message de demande d'ajout de cellule (404) indique que le premier élément de réseau (102) planifie des ressources radio sur ladite bande radio (510) pour le dispositif terminal (110), le procédé comprend en outre :
l'initiation de la planification de ressources radio sur une bande radio de la deuxième technologie d'accès radio pour le dispositif terminal (110).

15. Procédé selon l'une quelconque des revendications précédentes 10 à 14, comprenant en outre :
la détection, sur la base d'au moins un critère prédéterminé, de la nécessité de changer l'élément de réseau réalisant la planification sur ladite bande radio ; et
la transmission, au premier élément de réseau (102), d'un message de demande de modification (432) demandant de changer l'élément de réseau réalisant la planification.

16. Appareil comprenant au moins un processeur et au moins une mémoire comportant un code de programme informatique, dans lequel l'au moins une mémoire et le code de programme informatique sont configurés, avec l'au moins un processeur, pour amener un premier élément de réseau (102) fournissant une première cellule (104) d'un système de communication cellulaire, à réaliser des opérations comprenant :
l'acquisition d'informations (402) sur un dispositif terminal (110) du système de communication cellulaire, la première cellule (104) étant une cellule de première technologie d'accès radio ;
en déterminant, sur la base des informations acquises, que le dispositif terminal (110) est en mesure d'utiliser une deuxième communication basée sur une technologie d'accès radio, la transmission d'un message de demande d'ajout de cellule (404) à un deuxième élément de réseau (112) fournissant une deuxième cellule (114) du système de communication cellulaire, la deuxième cellule (114) étant une cellule de deuxième technologie d'accès radio,
dans lequel le message de demande d'ajout de cellule (404) indique que le dispositif terminal (110) est en mesure d'utiliser la deuxième communication basée sur une technologie d'accès radio,
et dans lequel le message de demande d'ajout de cellule (404) comprend un élément d'information qui, soit indique que le premier élément de réseau (102) planifie des ressources radio sur une bande radio (510) partagée de la première technologie d'accès radio pour le dispositif terminal (110), soit demande au deuxième élément de réseau (112) de planifier des ressources radio sur ladite bande radio (510) pour le dispositif terminal (110) ; et
l'initiation de la réception d'un message de rétroaction (406) indiquant si le deuxième élément de réseau (112) accepte une demande d'ajout de cellule indiquée dans le message de demande d'ajout de cellule (404) ;
**caractérisé par** :
dans lequel si l'élément d'information du message de demande d'ajout de cellule (404) indique que le premier élément de réseau (102) planifie des ressources radio sur ladite bande radio (510) pour le dispositif terminal (110), le procédé comprend en outre :
la réception d'un message (414) du deuxième élément de réseau (112), le message demandant une permission de planifier des ressources radio sur ladite bande radio (510) pour le dispositif terminal (110) ; et
sur octroi de la permission, l'indication de la permission (416) au deuxième élément de réseau (112, 122).

17. Appareil comprenant au moins un processeur et au moins une mémoire comportant un code de programme informatique, dans lequel l'au moins une mémoire et le code de programme informatique sont configurés, avec l'au moins un processeur, pour amener un deuxième élément de réseau (112) fournissant une deuxième cellule (114) d'un système de communication cellulaire, à réaliser des opérations comprenant :
la réception d'un message de demande d'ajout de cellule (404) à partir d'un premier élément de réseau (102) fournissant une première cellule (104) du système de communication cellulaire, la première cellule étant une cellule de première technologie d'accès radio et la deuxième cellule (114) étant une cellule de deuxième technologie d'accès radio,
dans lequel le message de demande d'ajout de cellule indique que le dispositif terminal (110) est en mesure d'utiliser la deuxième communication basée sur une technologie d'accès radio,
et dans lequel le message de demande d'ajout de cellule (404) comprend un élément d'information qui, soit indique que le premier élément de réseau (102) planifie des ressources radio sur une bande radio (510) de la première technologie d'accès radio pour le dispositif terminal (110), soit demande au deuxième élément de réseau (112) de planifier des ressources radio sur ladite bande radio (510) pour le dispositif terminal (110) ; et
**caractérisé par** :
la transmission d'un message de rétroaction (406) au premier élément de réseau (102), le message de rétroaction (406) indiquant soit un accusé de réception soit un accusé de réception négatif d'une demande d'ajout de cellule indiquée dans le message de demande d'ajout de cellule (404) reçu ;
la transmission d'un message (414) au premier élément de réseau (102), le message (414) demandant une permission de planifier des ressources radio sur ladite bande radio (510) de la première technologie d'accès radio pour le dispositif terminal (110) ; et à la réception de la permission (416), l'initiation de la planification de ressources radio sur ladite bande radio pour le dispositif terminal (110).
